# EUROPÄISCHE PATENTSCHRIFT

(11) **EP 0 442 387 B1**
(45) Veröffentlichungstag und Bekanntmachung des Hinweises auf die Patenterteilung: **20.04.1994**
(21) Anmeldenummer: 91101754.9
(22) Anmeldetag: 08.02.1991
(51) Int. Cl.: A01B 63/10, F16H 19/00, G05G 11/00

(54) **Betätigungsvorrichtung zur Fernbetätigung der Lageregelung eines hydraulischen Krafthebers**
Actuating device for the remote control of the position regulation of an hydraulic power lift
Dispositif de commande pour la commande à distance du réglage de position d'un élévateur hydraulique

(30) Priorität: 13.02.1990 DE 4004285
(43) Veröffentlichungstag der Anmeldung: 21.08.1991
(73) Patentinhaber: DEERE & COMPANY, Moline, Illinois 61265 (US)
(72) Erfinder: Zahn, Werner, Dipl.-Ing. (FH), W-6822 Altlussheim (DE); Heilmann, Joachim, Dipl.-Ing. (FH), W-6919 Bammental (DE)
(74) Vertreter: Feldmann, Bernhard

(56) Entgegenhaltungen:
- DE-A- 3 318 114
- GB-A- 943 916
- GB-A- 2 216 980
- US-A- 3 363 480
- US-A- 4 258 580
- LANDTECHNIK vol. 37, no. 4, April 1982, Lehrte, DE Seiten 162 - 165; F.-W.HÖFER: "Möglichkeiten der Ansteuerung von Hydraulikventilen aus Kabinen"

## Beschreibung

Die Erfindung betrifft eine Betätigungsvorrichtung zur manuellen Fernbeeinflussung eines Ventils zur Lageregelung des hydraulischen Krafthebers eines Kraftfahrzeuges. Die Betätigungsvorrichtung enthält eine drehbar gelagerte Handbetätigung, die drehfest mit einem Antriebszahnrad verbunden ist, dessen Drehbewegung in eine Längsbewegung einer verschiebbar geführten Zahnstange, die mittels eines Übertragungsmechanismus mit dem Ventil in Verbindung steht, überführbar ist. Solch eine betätigungsvorrichtung ist aus der DE-A-3318114 bekannt.

Eine derartige Betätigungsvorrichtung dient z. B. als zusätzliche, außerhalb der Fahrzeugkabine angeordnete Fernbetätigung, die mit einem in der Fahrzeugkabine angeordneten Hauptbedienungshebel einer Dreipunktgerätekupplung eines Ackerschleppers mechanisch gekoppelt ist und sich unabhängig vom Hauptbedienungshebel von außen verstellen läßt, so daß zu der Dreipunktgerätekupplung gehörige untere Lenker angehoben oder abgesenkt werden können, ohne daß eine Bedienungsperson auf den Ackerschlepper aufsteigen muß. Solche Betätigungseinrichtungen befinden sich gewöhnlich in der Nähe des Fahrzeughecks, beispielsweise auf dem Kotschützer eines Hinterrades, und ermöglichen ein einfaches Anhängen und Abhängen der verschiedensten Arbeitsgeräte, wobei die Kupplungselemente des Krafthebers nach Sicht auf die richtige Höhe angehoben werden können.

Um eine Verletzungsgefahr für Bedienungspersonen zu vermeiden, darf der Kraftheber jedoch nicht vom Fahrzeugheck aus in seiner gesamten, ihm zur Verfügung stehenden Bewegungshöhe angehoben werden. Es wurde daher durch die DE-OS 33 18 114 eine Betätigungsvorrichtung der eingangs genannten Art vorgeschlagen, bei der die Handbetätigung als verschwenkbarer Handhebel ausgebildet ist und nach Erreichen eines Teiles seines dem gesamten Hub des Kraftheberzylinders entsprechenden Stellweges mechanisch in seinem Schwenkweg begrenzbar ist.

Ferner wird durch Sicherheitsvorschriften (EWG-Richtlinie Anh. II 86/415/EWG) gefordert, daß durch die Betätigung einer externen Betätigungsvorrichtung eine rasche Aufwärtsbewegung des Dreipunktgeräteanbaus über eine große Wegstrecke unmöglich ist, um eine Bedienungsperson, die sich zwischen dem Ackerschlepper und dem anzubauenden Gerät aufhält, nicht zu gefährden. Es wird beispielsweise gefordert, daß die Betätigungsvorrichtung eine Begrenzung der Aufwärtsbewegung ermöglicht, so daß bei jeder Betätigung der Betätigungsvorrichtung der Hub der Kopplungspunkte der Unterlenker 100 mm nicht übersteigt.

Die mit der Erfindung zu lösende Aufgabe wird darin gesehen, eine Betätigungsvorrichtung der eingangs genannten Art anzugeben, durch die der Hub für jede Betätigung begrenzt ist und die ein verbessertes Ansprechverhalten gegenüber herkömmlichen, direkt gesteuerten Betätigungseinrichtungen aufweist.

Die Aufgabe wird erfindungsgemäß dadurch gelöst, daß zwischen Antriebszahnrad und Zahnstange ein Untersetzungsgetriebe angeordnet ist.

Hierdurch erfolgt eine Untersetzung des Bedienungsweges, d. h. eine Betätigung der Handbetätigung hat eine relativ kleine Verstellung der Zahnstange und damit des Regelventils zur Folge, so daß für ein Anheben oder Absenken des Geräteträgers ein längerer Bedienungsweg erforderlich ist als bei herkömmlichen Betätigungseinrichtungen. Das Anheben und Absenken erfolgt vorzugsweise in relativ kleinen Schritten, wobei sukzessiv ein Nachfassen und Verdrehen der Handbetätigung erforderlich ist. Die Ausführung eines großen gefahrvollen Hubes durch einmalige Betätigung ist nicht möglich. Ferner ergeben sich durch die Verlängerung des Bedienungsweges eine verbesserte Dosierbarkeit und ein besseres Ansprechverhalten gegenüber herkömmlichen, direkt gesteuerten Betätigungseinrichtungen. Durch den geringen Nachlauf der Hubbewegung bei einmaliger Betätigung kann dem Totmannsprinzip (das sind Sicherheitsvorkehrungen für den Fall, daß eine Bedienungsperson wie tot zusammen-bricht) Rechnung getragen werden.

Vorzugsweise findet an Stelle des bekannten verschwenkbaren Handhebels als Handbetätigung ein verdrehbares Handrad Verwendung, das zur Erleichterung der Betätigung auf seinem Umfang bogenförmige Griffmulden aufweisen kann. Durch die Umwandlung der üblichen Schwenkbewegung in eine Drehbewegung treten die oben genannten Vorteile noch deutlicher hervor. Die Absicherung gegen unbeabsichtigtes Betätigen ist durch die geringere Angriffsmöglichkeit am Handrad verbessert. Ein Durchfahren des gesamten Hubbereiches in einem Schritt ist nicht mehr möglich, da die mögliche Drehbewegung der Hand nur einen Teilhub erlaubt.

Als bevorzugten Untersetzungsverhältnisbereich schlägt die Erfindung ein Verhältnis von 1 : 3 bis 1 : 7 vor. Insbesondere hat sich ein Untersetzungsverhältnis von ca. 1 : 5 als vorteilhaft erwiesen.

Einer bevorzugten Ausgestaltung der Erfindung zufolge ist das Untersetzungsgetriebe als Stirnradgetriebe ausgebildet, bei dem zwischen einem mit der Handbetätigung drehfest verbundenen Zahnrad und der Zahnstange ein Übertragungszahnrad zwischengeschaltet ist.

Vorzugsweise steht das Antriebszahnrad mit einer Außenverzahnung bzw. mit einer Innenverzahnung des Übertragungszahnrades in Eingriff.

Einer weiteren bevorzugten Ausgestaltung der Erfindung zufolge ist das Untersetzungsgetriebe als Planetengetriebe ausgebildet. Dabei ist vorzugsweise das mit der Handbetätigung drehfest verbundene Antriebszahnrad das Sonnenrad, das wenigstens ein am Gehäuse der Betätigungsvorrichtung drehbar gelagertes Zwischenzahnrad antreibt, welches in die Innenverzahnung eines Umlaufzahnrades eingreift. Das Umlaufzahnrad steht mit seiner Außenverzahnung mit der Zahnstange in Eingriff.

Um ein relativ kleines Antriebszahnrad verwenden zu können, sollten dessen Zähne und die Zahnabstände möglichst klein sein. Es ist daher zweckmäßig, wenn bei einem Stirnradgetriebe das Übertragungszahnrad bzw. bei einem Planetengetriebe das Umlaufzahnrad zwei Verzahnungen mit unterschiedlicher Zahnteilung aufweist, von denen die feinere Zahnteilung mit dem Antriebszahnrad und die gröbere Zahnteilung mit der Zahnstange in Eingriff steht. Die unterschiedliche Zahnteilung entspricht grundsätzlich auch der durch die Untersetzung auftretenden unterschiedlichen Kraftübertragung der beiden Verzahnungen. Beide Verzahnungen liegen vorzugsweise auf einem Teilkreis.

Die Verzahnungen des Übertragungszahnrades bzw. des Umlaufzahnrades brauchen sich nicht über den ganzen Umfang zu erstrecken. Daher sind die Verzahnungen des Übertragungszahnrades in vorteilhafter Weise segmentförmig angeordnet. Die Segmentwinkel werden den Erfordernissen, d. h. der erforderlichen Verschiebestrecke der Zahnstange, angepaßt.

Entsprechend dem bevorzugten Untersetzungsverhältnis ist vorzugsweise der Teilkreisdurchmesser der mit dem Antriebszahnrad in Eingriff stehenden Verzahnung des Übertragungszahnrades bzw. des Umlaufzahnrades ungefähr dreibis siebenmal so groß wie der Durchmesser des Antriebszahnrades.

Weitere vorteilhafte Ausgestaltungen und Weiterbildungen der Erfindung gehen aus den Unteransprüchen hervor.

Anhand der Zeichnung, die Ausführungsbeispiele der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: in schematischer Darstellung einen Ackerschlepper schräg von hinten mit einer erfindungsgemäßen Betätigungsvorrichtung zur Fernbetätigung der Lageregelung eines hydraulischen Krafthebers,
- Fig. 2: die Rückansicht einer Betätigungsvorrichtung gemäß eines ersten Ausführungsbeispieles der Erfindung,
- Fig. 3: eine Schnittdarstellung der Betätigungsvorrichtung gemäß Fig. 2 entlang der Linie 3 - 3,
- Fig. 4: die Rückansicht einer Betätigungsvorrichtung gemäß eines zweiten Ausführungsbeispieles der Erfindung,
- Fig. 5: eine Schnittdarstellung der Betätigungsvorrichtung gemäß Fig. 4 entlang der Linie 5- 5,
- Fig. 6: die Rückansicht einer Betätigungsvorrichtung gemäß eines dritten Ausführungsbeispieles der Erfindung und
- Fig. 7: eine Schnittdarstellung der Betätigungsvorrichtung gemäß Fig. 6 entlang der Linie 7 - 7.

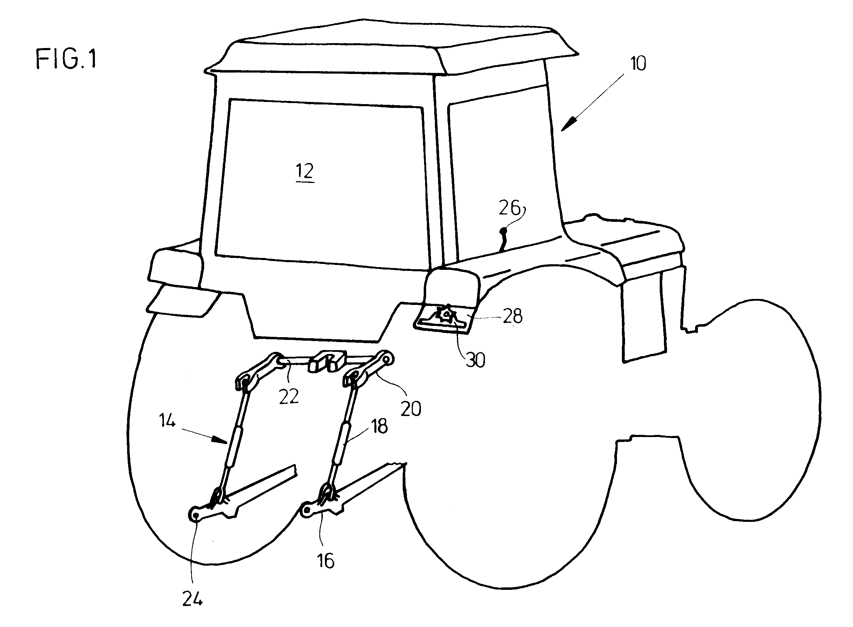

Ein in Fig. 1 mit seinen Umrissen dargestellter Ackerschlepper 10 mit einer Kabine 12 ist an seinem rückwärtigen Ende mit einer Dreipunktgerätekupplung 14 versehen, mittels derer eine Verbindung zu einem anzuhängenden, jedoch nicht dargestellten Gerät hergestellt werden kann. Bei dem Gerät kann es sich um einen Pflug, eine Sämaschine, eine Egge oder eine sonstige Maschine handeln.

Die Dreipunktgerätekupplung 14 weist hierzu zwei untere Lenker 16 auf, die über Hubstreben 18 und Hubarme 20 mit einer Hubwelle 22 verbunden sind und geräteseitig Kugelösen 24 aufweisen. Die Hubwelle 22 selbst kann über einen nicht dargestellten, an ihr exzentrisch angreifenden Hubzylinder verdreht werden, während die unteren Lenker 16 um einen in der Zeichnung nicht ersichtlichen Federstab vertikal schwenken können. Die Schwenkbewegung wird dabei von der drehenden Hubwelle 22 bewirkt und über die Hubarme 20 und die Hubstreben 18 auf die unteren Lenker 16 übertragen. Ferner gehört zu der Dreipunktgerätekupplung 14 ein in die Zeichnung nicht aufgenommener oberer Lenker, über den das angehängte Gerät während des Schwenkvorganges der unteren Lenker 16 in einer senkrechten oder annähernd senkrechten Lage gehalten wird.

Zur Steuerung der Drehung der Hubwelle 22 ist eine nicht gezeichnete Steuervorrichtung mit einem Steuerhebel 26 in der Kabine 12 in dem Ackerschlepper 10 vorgesehen, der außer durch den Steuerhebel 26 auch Impulse über den Federstab eingegeben werden können.

Der Steuervorrichtung ist eine ebenfalls nicht gezeigte Regelvorrichtung überlagert, die es ermöglicht, das angehängte Gerät mindestens analog einer Lageregelung und einer Zugwiderstandsregelung zu führen. Gegebenenfalls kann auch eine Mischung beider Regelarbeiten, nämlich eine Mischregelung vorgesehen sein. Hierbei bedeutet Lageregelung, daß das angehängte Gerät stets in der gleichen vertikalen Stellung gegenüber dem Ackerschlepper 10 gehalten wird, wobei diese über die Stellung des Steuerhebels 26 direkt bestimmt wird, so daß das angehängte Gerät stets die gleiche Arbeitstiefe beibehält. Zugwiderstandsregelung dagegen bedeutet, daß das angehängte Gerät stets eine Arbeitstiefe einhält, die einem bestimmten Zugwiderstand beim Ziehen durch den Boden entspricht. Der Zugwiderstand wird durch eine proportionale Verbiegung des Federstabes auf die Regelvorrichtung übertragen und bewirkt dort die Einleitung eines Hub- oder Senkvorganges der Dreipunktgerätekupplung 14.

Der Steuerhebel 26 ist in bekannter Ausführung in einer nicht dargestellten Kulisse geführt und innerhalb eines vorgegebenen Bereiches bewegbar. Ist als Regelungsart die Lageregelung gewählt, dann erfolgt proportional zu dem Verstellweg des Stellhebels 26 in der Kulisse ein Anheben oder Absenken der unteren Lenker 16, und zwar so, daß sich die unteren Lenker 16 in ihrer untersten Stellung befinden, wenn der Steuerhebel 26 am vorderen Ende der Kulisse anliegt, und ihre oberste Stellung einnehmen, wenn sich der Steuerhebel 26 an dem rückwärtigen Ende der Kulisse befindet.

Hingegen unterteilt sich der Bereich in einen Leerbereich und in einen Regelbereich, wenn als Regelart die Zugwiderstandsregelung gewählt ist, wobei sich der Leerbereich von dem vorderen Ende der Kulisse und der Regelbereich von dem rückwärtigen Ende der Kulisse aus erstrecken. Eine Verstellung des Steuerhebels 26 in dem Leerbereich, solange die Zugwiderstandsregelung gewählt ist, bleibt ohne Wirkung auf die Dreipunktgerätekupplung 14. Eine Verstellung des Steuerhebels 26 in dem Regelbereich führt zu einem unkontrollierten Anheben beziehungsweise Absenken der unteren nichtbelasteten Lenker 16, da deren vertikale Schwenkbewegung in der Zugwiderstandsregelung fast ausschließlich in Abhängigkeit von den durch den Federstab oder ein sonstiges Zugwiderstandsübertragungsglied erfahrenen Impulsen erfolgt.

Schließlich ist in einem rückwärtigen Außenbereich des Ackerschleppers 10, beispielsweise auf dem das rechte Hinterrad überdeckenden Kotschützer 28, eine Fernbetätigungsvorrichtung 30 vorgesehen, die über einen Seilzug 44 oder ein sonstiges Gestänge mit dem Steuerhebel 26 verbunden ist und in begrenztem Maße auf diesen eine Bewegung übertragen kann, so daß die unteren Lenker 16 der Dreipunktgerätekupplung 14 nicht nur von der Kabine 12 aus über den Steuerhebel 26 direkt, sondern auch von außerhalb der Kabine 12 mittelbar über die Fernbetätigungsvorrichtung 30 angehoben beziehungsweise abgesenkt werden können. Dies ist insbesondere wichtig, um die Höhe der unteren Lenker 16 auf die richtige Ankuppelhöhe beim Anhängen des Gerätes bringen zu können, was von der Kabine 12 aus unter Umständen sehr schwierig ist, aber sehr leicht durchgeführt werden kann, wenn eine die Dreipunktgerätekupplung 14 bedienende Person direkt neben dem anzuhängenden Gerät steht. Um jedoch zu vermeiden, daß über die Fernbetätigungsvorrichtung 30 der Steuerhebel 26 in den Regelbereich bewegt wird, wenn als Regelart die Zugwiderstandsregelung gewählt ist, ist die Fernbetätigungsvorrichtung 30 nur in relativ kleinen Schritten bewegbar und enthält eine Sperrvorrichtung, die nur einen begrenzten Hub der Fernbetätigungsvorrichtung 30 ermöglicht.

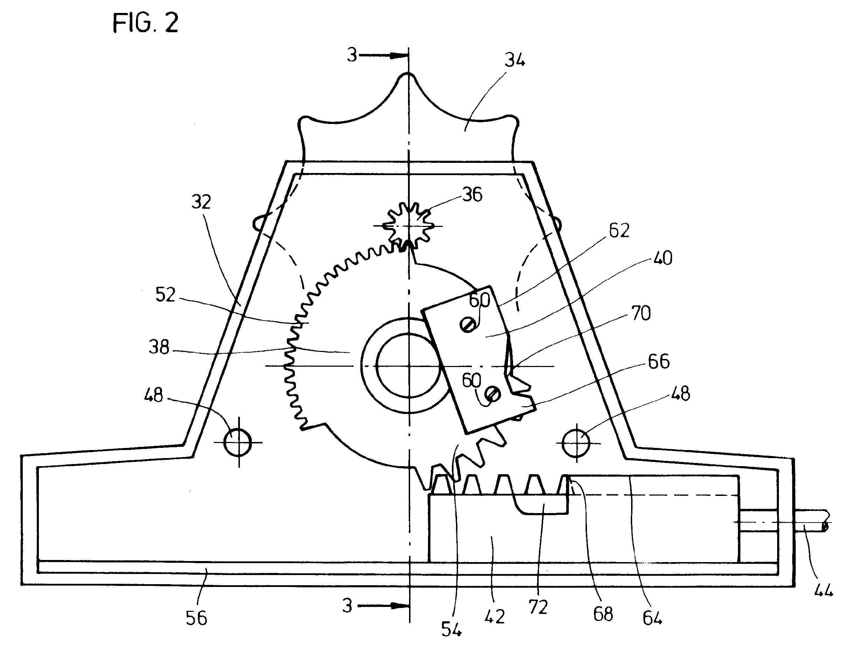

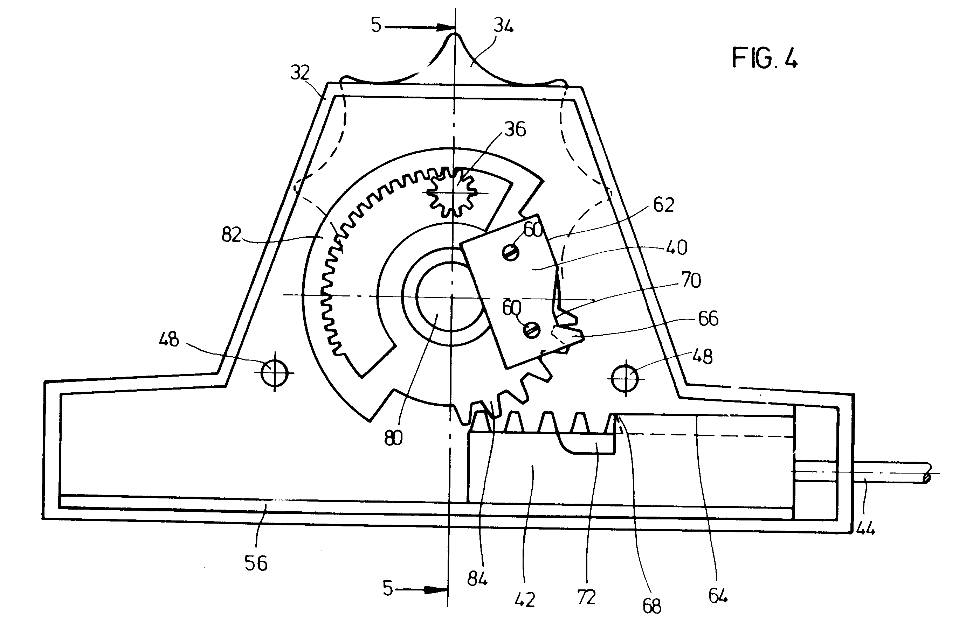

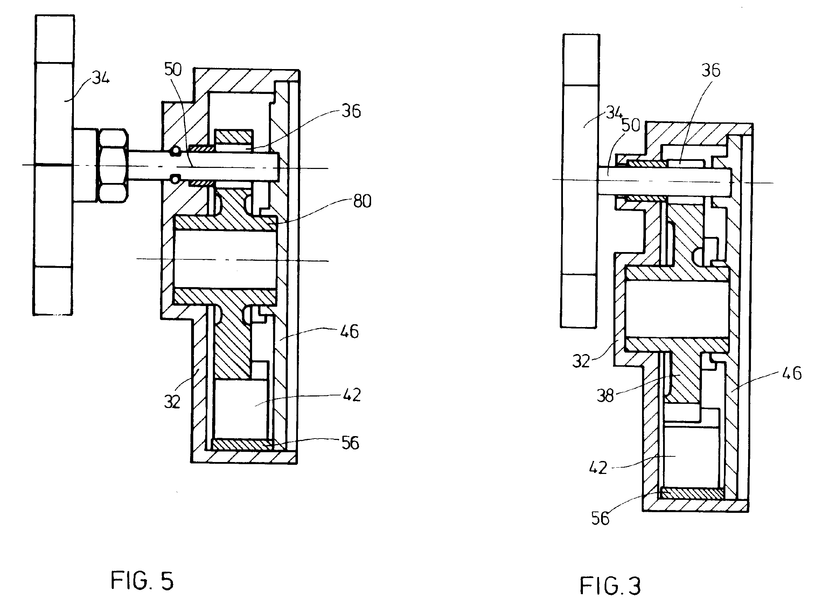

Die Betätigungsvorrichtung gemäß Fig. 2 und 3 besteht im wesentlichen aus einem Gehäuse 32, einem Handrad 34, zwei Zahnrädern 36 und 38, einem Verriegelungselement 40, einer Zahnstange 42 und einem aus dem Gehäuse 32 austretenden Seilzug 44. Das Gehäuse 32 ist gemäß Fig. 2 von oben und gemäß Fig. 3 von rechts durch eine abnehmbare Abdeckplatte 46 verschlossen. Mit seiner der Abdeckplatte 46 zugewandten Seite liegt das Gehäuse am Kotschützer 28 an und ist an diesem befestigt. Zur Befestigung am Kotschützer 28 sind im Gehäuse 32 zwei Bohrungen 48 vorgesehen, durch die nicht dargestellte Befestigungsschrauben gesteckt werden können.

Das Handrad 34 enthält auf seinem Umfang bogenförmige Griffmulden und ist fest mit einer im Gehäuse 32 und der Abdeckplatte 46 gelagerten Welle 50 verbunden. Die Welle 50 trägt ferner ein innerhalb des Gehäuses 32 angeordnetes Antriebszahnrad 36. Im Gehäuse 32 und der Abdeckplatte 46 ist ferner ein Übertragungszahnrad 38 drehbar gelagert. Das Übertragungszahnrad 38 weist zwei Segmente auf, innerhalb derer Verzahnungen 52 und 54 mit unterschiedlicher Zahnteilung auf einem einheitlichen Zahnteilkreis liegen. Die Verzahnung 52 mit der feineren Zahnteilung steht mit der Verzahnung des Antriebszahnrades 36 in Eingriff, während die Verzahnung 54 mit der gröberen Zahnteilung mit den Zähnen der Zahnstange 42 kämmt. Die Zahnstange 42 gleitet auf einer Gleitschiene 56 und ist mit einem Seilzug 44 verbunden, durch den eine Verschiebung der Zahnstange 42 dem Steuerhebel 26 mitgeteilt wird.

Beim Verdrehen des Handrades 34 wird die aufgewandte Kraft durch das Antriebszahnrad 36 und das Übertragungszahnrad 38 auf die Zahnstange 42 übertragen und verschiebt diese. Diese Verschiebung teilt sich dem Seilzug 44 mit. Da sich die Teilkreisdurchmesser des Antriebszahnrades 36 und des Übertragungszahnrades 38 im Verhältnis von ca. 1 : 6 zueinander verhalten, erfolgt eine entsprechende Untersetzung der Antriebsbewegung. Um die Zahnstange über ihren verschiebbaren Hub zu verschieben, ist ein mehrfaches Verdrehen und Nachfassen am Handrad 34 erforderlich.

Durch zwei Schrauben 60 ist am Übertragungszahnrad 38 ein plattenförmiges Verriegelungselement 40 befestigt, welches sich mit dem Übertragungszahnrad 38 mitdreht. Die nach außen weisende Kante 62 des Verriegelungselementes 40 ist so ausgerichtet, daß sie nach Verdrehung des Übertragungszahnrades 38 im Uhrzeigersinn auf dem gemäß Fig. 2 vor der Zahnstangenverzahnung liegenden Steg 64 der Zahnstange 42 zur Auflage kommt, d. h. die Kante 62 liegt dann parallel auf dem Steg 64 auf und ein weiteres Verdrehen des Übertragungszahnrades 38 ist nicht mehr möglich.

In dieser Lage lösen sich auch die Verzahnung 54 des Übertragungszahnrades 38 und die Verzahnung der Zahnstange 42 aus ihrem gegenseitigen Eingriff. Es ist daher möglich, die Zahnstange durch Verschieben des Seilzuges 44 weiter nach links zu verschieben. Nach einer solchen Verschiebung läßt sich das Übertragungszahnrad 38 weder zur einen noch zur anderen Seite verdrehen, bis eine Rückverschiebung der Zahnstange 42 nach rechts erfolgt ist und die beiden genannten Verzahnungen wieder in Eingriff treten.

Damit das Parallelstellen der Kante 62 und des Steges 64 nicht durch die Ecken 66 und 68 behindert wird, ist die Kante 62 des Verriegelungselementes mit einer Einbuchtung 70 und der Steg mit einer Ausnehmung 72 versehen.

Durch das Zusammenwirken zwischen dem Verriegelungselement 40 einerseits und dem Steg 64 der Zahnstange 42 andererseits wird sichergestellt, daß durch Verdrehen des Handrades 34 lediglich ein Teil des gesamten Verstellweges des Steuerhebels 26 einstellbar ist. Damit wird gewährleistet, daß durch Verstellung des Handrades 34 nicht der Regelbereich erreicht werden kann, in dem die Regelautomatik einsetzt und ein nicht gewolltes Anheben oder Absenken der unteren Lenker 16 auslöst.

Die in den Figuren 4 und 5 dargestellte Betätigungsvorrichtung gemäß eines zweiten Ausführungsbeispieles der Erfindung weist viele Ähnlichkeiten mit der in den Figuren 2 und 3 dargestellten Betätigungsvorrichtung auf, so daß sich entsprechende Teile mit den gleichen Bezugszeichen belegt wurden. Ein wesentlicher Unterschied ist lediglich in der Ausbildung des Übertragungszahnrades zu sehen.

Auch das Übertragungszahnrad 80 gemäß Fig. 4 besitzt zwei Segmente unterschiedlicher Verzahnung 82 und 84. Bei der Verzahnung 82 handelt es sich um eine Innenverzahnung, in die die Verzahnung des Antriebszahnrades 36 eingreift. Die Verzahnung 84 ist als Außenverzahnung ausgebildet und entspricht der Verzahnung 54 in Fig. 2. Sie steht mit der Verzahnung der Zahnstange 42 in Eingriff.

Auch in diesem Ausführungsbeispiel liegen die Verzahnungen 82 und 84 des Übertragungszahnrades 80 auf dem gleichen Teilkreisdurchmesser, was jedoch keine zwingende Vorschrift darstellt, da auch Lösungen mit unterschiedlichen Teilkreisdurchmessern für die Verzahnungen des Übertragungszahnrades möglich sind. Die Wahl der Teilkreisdurchmesser sowie des Durchmessers des Antriebszahnrades 36 richtet sich nach dem erwünschten Übertragungsverhältnis der Betätigungsvorrichtung.

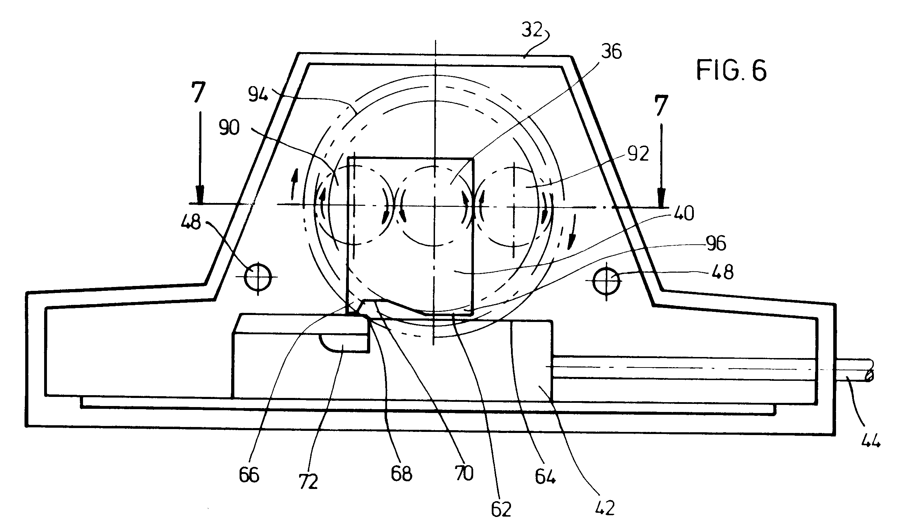

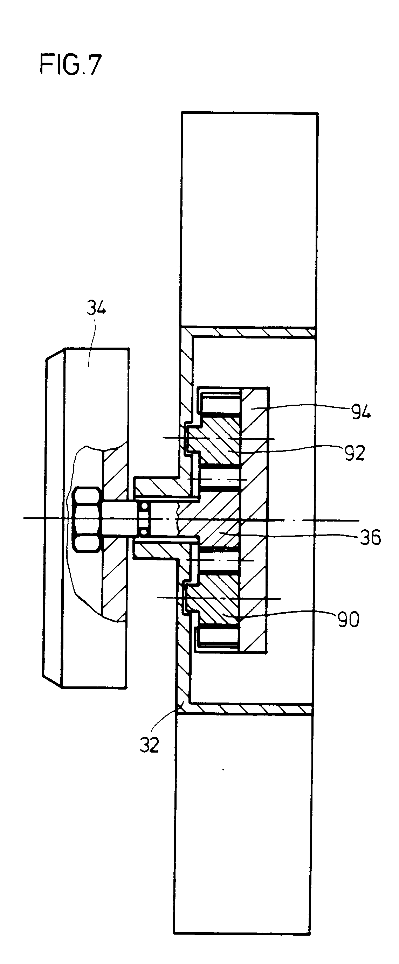

Eine dritte Ausführungform der erfinderischen Betätigungsvorrichtung geht aus den Figuren 6 und 7 hervor. Auch hier weisen das Gehäuse 32, das Verriegelungselement 40, die Zahnstange 42 und der Seilzug 44 Ähnlichkeiten mit den entsprechenden Teilen der Figuren 2 bis 5 auf, so daß die sich entsprechenden Teile mit den gleichen Bezugszeichen belegt wurden.

Das Untersetzungsgetriebe gemäß Fig. 6 und 7 ist mit einem Planetengetriebe verwandt. Das Handrad 34 ist mit einer in dem Gehäuse 32 gelagerten Welle 50 drehfest verbunden, welche innerhalb des Gehäuses 32 ein Antriebszahnrad 36 trägt. Das Antriebszahnrad kämmt mit zwei ebenfalls im Gehäuse 32 drehbar gelagerten Zwischenzahnrädern 90 und 92, deren Verzahnung mit der Innenverzahnung eines Umlaufzahnrades 94 in Eingriff steht. Die Außenverzahnung des Umlaufzahnrades greift in die Verzahnung der Zahnstange 42 ein. Eine Drehbewegung am Handrad 34 wird über das Antriebszahnrad 36, die Zwischenzahnräder 90 und 92 und das Umlaufzahnrad 94 auf die Zahnstange 42 übertragen, wobei die Drehbewegung in eine translatorische Bewegung umgesetzt wird.

Gemäß Fig. 6 ist die Zahnstange 42 so weit zur Mitte verschoben, daß die Kante 62 des Verriegelungselementes 40, welches am Umlaufzahnrad 94 befestigt ist, parallel zum Steg 64 der Zahnstange 42 ausgerichtet ist und beide aneinander einander gleiten. Eine weitere Verdrehung des Umlaufzahnrades im Uhrzeigersinn ist nicht möglich, da hierbei die hintere Ecke 96 des Verriegelungselementes 40 gegen den Steg drückt. Durch Beeinflussung des Steuerhebels 26 läßt sich jedoch der Seilzug 44 und mit ihm die Zahnstange 42 aus der in Fig. 6 dargestellten Lage weiter nach links verschieben. In dieser Lage läßt sich dann das Umlaufzahnrad 94 weder vor- noch zurückdrehen. Erst wenn die Zahnstange 42, ausgehend von einer linken Lage, in die in Fig. 6 dargestellte mittlere Lage zurückgeführt ist, läßt sich das Umlaufzahnrad 94 entgegen dem Uhrzeigersinn verdrehen, wobei zunächst die Ecke 66 in die Ausnehmung 72 und die Ecke 68 in die Einbuchtung 70 eingreift.

Mit dieser Lösung bleibt für den Steuerhebel 26 der volle Hub erhalten, während für eine Verstellung durch den Handhebel 34 lediglich ein Teilhub zugelassen ist.

## Patentansprüche

1. Betätigungsvorrichtung zur manuellen Fernbeeinflussung eines Ventils zur Lageregelung des hydraulischen Krafthebers eines Kraftfahrzeuges, beispielsweise eines Ackerschleppers (10), mit einer drehbar gelagerten Handbetätigung, die drehfest mit einem Antriebszahnrad (36) verbunden ist, dessen Drehbewegung in eine Längsbewegung einer verschiebbar geführten Zahnstange (42), die mittels eines Übertragungsmechanismus mit dem Ventil in Verbindung steht, überführbar ist, dadurch gekennzeichnet, daß zwischen Antriebszahnrad (36) und Zahnstange (42) ein Untersetzungsgetriebe angeordnet ist.

2. Betätigungsvorrichtung nach Anspruch 1, dadurch gekennzeichnet, daß die Handbetätigung ein Handrad (34) ist.

3. Betätigungsvorrichtung nach Anspruch 1 oder 2, dadurch gekennzeichnet, daß das Untersetzungsverhältnis des Untersetzungsgetriebes einen Wert zwischen 1 : 3 und 1 : 7 einnimmt.

4. Betätigungsvorrichtung nach einem der Ansprüche 1 bis 3, dadurch gekennzeichnet, daß das Untersetzungsgetriebe als Stirnradgetriebe ausgebildet ist, bei dem zwischen einem mit der Handbetätigung (34) drehfest verbundenen Antriebszahnrad (36) und der Zahnstange (42) ein Übertragungszahnrad (38, 80) zwischengeschaltet ist.

5. Betätigungsvorrichtung nach Anspruch 4, dadurch gekennzeichnet, daß das Antriebszahnrad (36) mit einer Außenverzahnung (52) des Übertragungszahnrades (38) in Eingriff steht.

6. Betätigungsvorrichtung nach Anspruch 4, dadurch gekennzeichnet, daß das Antriebszahnrad (36) mit einer Innenverzahnung (82) des Übertragungszahnrades (80) in Eingriff steht.

7. Betätigungsvorrichtung nach einem der Ansprüche 1 bis 3, dadurch gekennzeichnet, daß das Untersetzungsgetriebe als Planetengetriebe ausgebildet ist.

8. Betätigungsvorrichtung nach Anspruch 7, dadurch gekennzeichnet, daß das mit der Handbetätigung (34) drehfest verbundene Antriebszahnrad (36) das Sonnenrad ist, das wenigstens ein am Gehäuse (32) der Betätigungsvorrichtung drehbar gelagertes Zwischenzahnrad (90, 92) antreibt, welches in die Innenverzahnung eines Umlaufzahnrades (94) eingreift, und daß das Umlaufzahnrad (94) mit einer Außenverzahnung mit der Zahnstange (42) in Eingriff steht.

9. Betätigungsvorrichtung nach einem der Ansprüche 4 bis 8, dadurch gekennzeichnet, daß das Übertragungszahnrad (38, 80) bzw. das Umlaufzahnrad (94) zwei Verzahnungen (52, 54; 82, 84) mit unterschiedlicher Zahnteilung aufweist, von denen die feinere Zahnteilung (52; 82) mit dem Antriebszahnrad (36) und die gröbere Zahnteilung (54; 84) mit der Zahnstange (42) in Eingriff steht.

10. Betätigungsvorrichtung nach einem der Ansprüche 4 bis 9, dadurch gekennzeichnet, daß die Verzahnungen (52, 54; 82, 84) auf dem Übertragungszahnrad (38, 80) bzw. dem Umlaufzahnrad (94) segmentförmig angeordnet sind.

11. Betätigungsvorrichtung nach einem der Ansprüche 4 bis 10, dadurch gekennzeichnet, daß der Teilkreisdurchmesser der mit dem Antriebszahnrad (36) in Eingriff stehenden Verzahnung (52, 54; 82, 84) des Übertragungszahnrades (38, 80) bzw. des Umlaufzahnrades (94) ungefähr drei- bis siebenmal so groß ist wie der Durchmesser des Antriebszahnrades (36).

12. Betätigungsvorrichtung nach einem der Ansprüche 1 bis 11, dadurch gekennzeichnet, daß drehfest am mit der Zahnstange (42) in Eingriff stehenden Zahnrad (38, 80, 94) eine Sperrvorrichtung (40) befestigt ist.

## Claims

1. An actuating device for manual remote control of a valve for the position regulation of a hydraulic power lift of a motor vehicle, an agricultural tractor for example (10), with a rotatably mounted manual actuator, which is rotationally fast with a drive pinion (36), whose rotary movement can be transferred to a longitudinal movement of a slidably guided rack (42), which is coupled to the valve by a transmission mechanism, characterized in that a reduction gear is arranged between the drive pinion (36) and the rack (42).

2. An actuating device according to claim 1, characterized in that the manual actuator is a handwheel (34).

3. An actuating device according to claim 1 or 2, characterized in that the reduction ratio of the reduction gear has a value between 1:3 and 1:7.

4. An actuating device according to any of claims 1 to 3, characterized in that the reduction gear is formed as a spur gear, in which a transmission gear (38, 80) is interposed between the drive pinion (36) rotationally fast with the manual actuator (34) and the rack (42).

5. An actuating device according to claims 4, characterized in that the drive pinion (36) engages with external teeth (52) of the transmission gear (38).

6. An actuating device according to claim 4, characterized in that the drive pinion (36) engages with internal teeth (82) of the transmission gear (80).

7. An actuating device according to any of claims 1 to 3, characterized in that the reduction gear is formed as a planetary gear.

8. An actuating device according to claim 7, characterized in that the drive pinion (36) rotationally fast with the manual actuator (34) is the sun-wheel, which drives at least one intermediate gear (90, 92) which is mounted rotatably on the housing (32) of the actuating device and engages the internal teeth of a ring gear (94), and in that the ring gear (94) has external teeth which engage with the rack (42).

9. An actuating device according to any of claims 4 to 8, characterized in that the transmission gear (38, 80) or the ring gear (94) has two sets of teeth (52, 54; 82, 84) with different pitches, of which the finer pitch (52; 82) engages with the drive pinion (36) and the coarser pitch (54; 84) engages with the rack (42).

10. An actuating device according to any of claims 4 to 9, characterized in that the sets of teeth (52, 54; 82, 84) on the transmission gear (38, 80) or the ring gear (94) are arranged in segments.

11. An actuating device according to any of claims 4 to 10, characterized in that the pitch diameter of the sets of teeth (52, 54; 82, 84) of the transmission gear (38, 80) or the ring gear (94) in engagement with the drive pinion (36) is approximately three to seven times the diameter of the drive pinion (36).

12. An actuating device according to any of claims 1 to 11, characterized in that the a locking device (40) is fixed fast against rotation to the gear (38, 80, 94) which engages with the rack (42).

## Revendications

1. Dispositif d'actionnement pour la commande manuelle à distance d'un distributeur de réglage de la position du vérin hydraulique d'un véhicule à moteur, par exemple d'un tracteur agricole (10), avec un moyen d'actionnement manuel monté à rotation, qui est relié en solidarité de rotation à une roue dentée menante (36) dont le mouvement de rotation peut être transformé en un déplacement longitudinal d'une crémaillère (42) guidée en translation, qui est reliée au distributeur par l'intermédiaire d'un mécanisme de transmission, **caractérisé** en ce qu'un mécanisme démultiplicateur est disposé entre la roue dentée menante (36) et la crémaillère (42).

2. Dispositif d'actionnement selon la revendication 1, **caractérisé** en ce que le moyen d'actionnement manuel est une roue a main (34).

3. Dispositif d'actionnement selon la revendication 1 ou 2, **caractérisé** en ce que le rapport de démultiplication du mécanisme démultiplicateur prend une valeur comprise entre 1 : 3 et 1 : 7.

4. Dispositif d'actionnement selon l'une quelconque des revendications 1 à 3, **caractérisé** en ce que le mécanisme démultiplicateur est réalisé sous la forme d'un réducteur à pignons droits, dans lequel un pignon de transmission (38, 80) est intercalé entre un pignon menant (36), relié en solidarité de rotation au moyen d'actionnement manuel (34), et la crémaillère (42).

5. Dispositif d'actionnement selon la revendication 4, **caractérisé** en ce que le pignon menant (36) est en prise avec une denture extérieure (52) du pignon de transmission (38).

6. Dispositif d'actionnement selon la revendication 4, **caractérisé** en ce que le pignon menant (36) est en prise avec une denture intérieure (82) du pignon de transmission (80).

7. Dispositif d'actionnement selon l'une quelconque des revendications 1 à 3, **caractérisé** en ce que le mécanisme démultiplicateur est réalisé sous la forme d'un réducteur à engrenages planétaires.

8. Dispositif d'actionnement selon la revendication 7, **caractérisé** en ce que le pignon menant (36) relié en solidarité de rotation au moyen d'actionnement manuel (34) est la roue solaire, qui entraîne au moins une roue dentée intermédiaire (90, 92), montée à rotation sur le carter (32) du dispositif d'actionnement et en prise avec la denture intérieure d'une roue planétaire (94), et en ce que la roue planétaire (94) est en prise avec la crémaillère (42) par une denture extérieure.

9. Dispositif d'actionnement selon l'une quelconque des revendications 4 à 8, **caractérisé** en ce que le pignon de transmission (38, 80) ou, selon le cas, la roue planétaire (94) présente deux dentures (52, 54 ; 82, 84) de pas différents, la denture plus fine (52 ; 82) étant en prise avec le pignon menant (36) et la denture plus grosse (54 ; 84) avec la crémaillère (42).

10. Dispositif d'actionnement selon l'une quelconque des revendications 4 à 9, **caractérisé** en ce que les dentures (52, 54 ; 82, 84) sont disposées sous forme de secteurs sur le pignon de transmission (38, 80) ou, selon le cas, la roue planétaire (94).

11. Dispositif d'actionnement selon l'une quelconque des revendications 4 à 10, **caractérisé** en ce que le diamètre primitif de référence de la denture (52, 54 ; 82, 84) du pignon de transmission (38, 80) ou, selon le cas, de la roue planétaire (94) qui est en prise avec le pignon menant (36), est égal à environ trois à sept fois le diamètre du pignon menant (36).

12. Dispositif d'actionnement selon l'une quelconque des revendications 1 à 11, **caractérisé** en ce qu'un dispositif de blocage (40) est fixé en solidarité de rotation sur la roue dentée (38, 80, 94) qui est en prise avec la crémaillère (42).
